# FASCICULE DE BREVET EUROPEEN

(11) **EP 2 551 742 B1**
(45) Date de publication et mention de la délivrance du brevet: **14.06.2017**
(21) Numéro de dépôt: 12354039.5
(22) Date de dépôt: 17.07.2012
(51) Int. Cl.: E06B 9/68, G05D 23/19, G05B 15/02, H05B 37/02, F24F 11/00

(54) **Système de gestion d'au moins un paramètre de confort d'un bâtiment, dispositif calculateur et équipement de bâtiment**
Steuerungssystem mindestens eines Komfortparameters eines Gebäudes, Berechnungsvorrichtung und entsprechende Ausrüstung des Gebäudes
System for managing at least one comfort parameter of a building, calculator device and building system

(30) Priorité: 27.07.2011 FR 1102352
(43) Date de publication de la demande: 30.01.2013
(73) Titulaire: Schneider Electric Industries SAS, 92500 Rueil-Malmaison (FR)
(72) Inventeur: Béguery, Patrick, 38190 Bernin (FR)
(74) Mandataire: Hecké, Gérard

(56) Documents cités:
- US-A- 5 711 480
- US-A1- 2010 025 483

## Description

### Domaine technique de l'invention

L'invention concerne un système de gestion d'au moins un paramètre de confort d'un bâtiment, du type comportant :
- plusieurs capteurs de mesure d'au moins une grandeur relative au paramètre de confort et d'envoi de valeurs fonctions de mesures de cette grandeur,
- au moins un dispositif calculateur de compilation desdites valeurs en provenance des capteurs et d'envoi de consignes,
- plusieurs équipements de bâtiment dont chacun comprend au moins un appareil d'action au moins sur ledit paramètre de confort et un contrôleur de réception d'au moins une desdites consignes et de commande de l'appareil d'action en fonction de cette consigne.

L'invention concerne également un dispositif calculateur de compilation de valeurs en provenance de capteurs de mesure d'une grandeur relative à au moins un paramètre de confort d'un bâtiment et d'envoi de consignes à destination d'équipements de bâtiment.

L'invention concerne encore un équipement de bâtiment, du type comprenant au moins un appareil d'action au moins sur un paramètre de confort d'un bâtiment et un contrôleur de réception d'au moins une consigne et de commande de cet appareil d'action en fonction de cette consigne.

### État de la technique

Lorsqu'elle existe, la gestion d'un ou plusieurs paramètres de confort dans les pièces d'un bâtiment est actuellement traitée le plus souvent de manière simple, en employant des fonctions de sécurité évitant les comportements les plus aberrants tels qu'un fonctionnement simultané d'une climatisation et d'un chauffage.

Quelques travaux proposent des collaborations entre équipements. Le plus souvent, de telles collaborations consistent en une simple prise en compte du fonctionnement d'un premier équipement par un deuxième équipement. Par exemple, si la climatisation est active, on limite l'apport solaire par des occultations au niveau des ouvertures sur l'extérieur. Cela peut être considéré comme une règle pouvant être incorporée à un système expert.

Le fonctionnement de plusieurs équipements d'un même bâtiment peut être piloté en employant un tel système expert, c'est-à-dire selon une approche que l'on peut qualifier « d'approche par règles expertes ». Un exemple d'une telle approche est présenté dans « Efficacité énergétique d'un système multi-technique de contrôle-commande » (M.Sechilariu & C.Demian, Actes IBPSA, Layon, 2008).

Plus exigeante, une autre approche de la gestion des consommations énergétiques d'un bâtiment nécessiterait l'utilisation d'une connaissance détaillée et globale du bâtiment et de ses équipements. Des solutions basées sur l'utilisation de modèles de connaissance globale d'un bâtiment sont possibles en théorie. En effet, il en existe et le sujet est étudié, comme en témoigne la demande de brevet américain US 2009/0112369 par exemple. Aujourd'hui, les solutions basées sur l'utilisation de modèles de connaissance globale d'un bâtiment sont toutefois seulement théoriques ou au simple stade de l'expérimentation. La mise en oeuvre effective, commercialement viable, de telles solutions se heurte à plusieurs obstacles. Tout d'abord, il se heurte au cloisonnement technique entre les différents opérateurs, y compris les constructeurs d'équipement, qu'il faudrait faire collaborer pour pouvoir parvenir à une solution commerciale. En particulier, chaque équipement possède son ou ses propres modes de fonctionnement, ainsi qu'un ou plusieurs pilotages spécifiques associés, que les constructeurs d'équipement ne souhaitent pas déléguer à un superviseur externe à l'équipement. L'emploi effectif de solutions basées sur l'utilisation de modèles de connaissance globale d'un bâtiment se heurte également à la complexité des modèles à mettre en oeuvre. En effet, dans la pratique et non plus en théorie, un modèle physique générique serait complexe, tant par la variété des équipements à considérer que par le nombre de paramètres à renseigner.

Moins rigoureuses que les solutions basées sur l'utilisation de modèles de connaissance globale d'un bâtiment, des solutions approchées ont été proposées. Dans le document « Développement et paramétrage de contrôleurs d'ambiance multicritères » (F.Richieri, Rapport de Thèse INSA Lyon, 2008), on trouve un exemple d'une telle solution approchée, qui se base sur l'emploi de systèmes flous. La calibration des solutions approchées reste toutefois complexe.

Plusieurs documents se sont intéressés à l'architecture matérielle susceptible de convenir pour un système de gestion d'au moins un paramètre de confort d'un bâtiment. Parmi ces documents, on a relevé les demandes de brevet américain US 2007/0176767, US 2009/0112369, US 2003/0050737 et US 2008/0281472, ainsi que le document de brevet grec GR2004100045.

Dans les demandes de brevet américain US 2007/0176767 et US 2009/0112369, l'architecture du système de gestion possède une structure hiérarchisée. Le bâtiment à gérer est découpé en zones, dont chacune est pilotée à un premier niveau ou niveau inférieur. Un dispositif de supervision général, à un deuxième niveau ou niveau supérieur, commande les pilotages qui s'effectuent au premier niveau.

Dans la demande US 2003/0050737, il est question de l'utilisation du courant porteur pour les communications au sein du système, de moyens de supervision par les utilisateurs et de possibilités de vidéo-surveillance.

La demande US 2008/0281472 s'intéresse à l'utilisation d'un réseau de communication du même type qu'Internet, dans l'architecture du système de gestion. Elle évoque en outre l'utilisation d'un moteur d'inférence, ce qui renvoie aux approches basées sur le principe des systèmes experts.

Les approches par règles expertes ne confrontent pas les performances des différents équipements d'un bâtiment. De ce fait, elles ne peuvent conduire qu'à un résultat assez moyen, bien en dessous de ce que serait un résultat optimal. En outre, un système expert est complexe et, de ce fait, très rigide. Le plus souvent, une modification ne peut être prise en compte qu'en multipliant les cas particuliers à l'intérieur du système expert ou bien en révisant une grande partie voire l'ensemble du jeu de règles du système expert. Il est donc très difficile de faire évoluer un système expert, par exemple afin de tenir compte d'une variation des performances d'un équipement tel qu'une pompe à chaleur, d'un changement du mode de fonctionnement (dysfonctionnement, maintenance, sécurité) d'un équipement et/ou de modifications qui concernent le parc d'équipements d'un bâtiment dans son ensemble et dont des exemples comprennent l'ajout, le remplacement et le vieillissement d'un de ces équipements ou de plusieurs d'entre eux.

Le document US2010/0025483 décrit des procédés de commande de la consommation énergétique d'un bâtiment et, plus précisément, d'un système CVC (chauffage, ventilation et climatisation - HVAC en anglais). Dans ces procédés, des mesures en provenance de capteurs sont collectées et complétées par une conlextualisation quant à l'heure du jour. Un processeur les utilise pour établir une prédiction quant à la consommation énergétique à venir. Cette prédiction est employée par le même processeur pour définir la commande de la consommation énergétique.

Le document US5711480 décrit un autre système CVC d'un bâtiment, dont la commande s'effectue à partir de la température, du taux d'humidité et/ou du taux de CO₂ mesurés dans les pièces du bâtiment par des capteurs. Les différents éléments du système, i.e. les régulateurs de flux d'air et leur unité centrale de commande, communiquent entre eux par des émetteurs/récepteurs radio intégrés à chaque élément.

### Objet de l'invention

L'invention a au moins pour but de permettre que la gestion d'au moins un paramètre de confort d'un bâtiment puisse être plus souple qu'une gestion basée sur un système expert, tout en pouvant faire l'objet d'une mise en pratique effective dans des bâtiments réels.

Selon l'invention, ce but est atteint grâce à un système de gestion du type précité, qui comporte des schémas de fonctionnement des équipements, le dispositif calculateur comportant au moins une mémoire de stockage desdits schémas de fonctionnement, des moyens de réception et de communication, à ladite mémoire, de ces schémas de fonctionnement, ainsi qu'au moins une unité de calcul desdites consignes, à partir des valeurs fonctions des mesures, en optimisant sur au moins un critère d'optimisation en fonction desdits schémas de fonctionnement.

Un avantage de l'invention est de permettre un meilleur niveau d'optimisation, sur au moins un critère, de la gestion d'au moins un paramètre de confort d'un bâtiment.

Le système de gestion selon l'invention peut incorporer une ou plusieurs autres caractéristiques avantageuses, isolément ou en combinaison, en particulier parmi celles définies ci-après.

Avantageusement, au moins l'un des équipements possède au moins un fonctionnement propre, ainsi qu'un schéma de fonctionnement représentatif de ce fonctionnement propre, et comporte des moyens d'envoi de ce schéma de fonctionnement à destination du dispositif calculateur.

Avantageusement, le système de gestion comporte un protocole commun de communication desdits schémas de fonctionnement. De préférence, au moins l'un des équipements et le dispositif calculateur sont pourvus de ce protocole commun de manière à pouvoir communiquer un schéma de fonctionnement de l'un vers l'autre.

Avantageusement, le système de gestion comporte au moins un paramètre variable d'optimisation employé par l'unité de calcul pour optimiser ledit critère d'optimisation. De préférence, le dispositif calculateur comporte des moyens de réception de ce paramètre variable d'optimisation depuis l'extérieur.

Avantageusement, le paramètre variable d'optimisation est choisi parmi un coût moyen de l'énergie et un coût d'une forme particulière d'énergie.

Avantageusement, ledit critère d'optimisation est choisi parmi une production minimale de dioxyde de carbone, un coût minimal de fonctionnement et une puissance minimale de fonctionnement.

L'invention a également pour objet un dispositif calculateur de compilation de valeurs en provenance de capteurs de mesure d'une grandeur relative à au moins un paramètre de confort d'un bâtiment et d'envoi de consignes à destination d'équipements de bâtiment. Ce dispositif calculateur comporte au moins une mémoire de stockage de schémas de fonctionnement d'équipements de bâtiment, des moyens de réception et de communication, à ladite mémoire, de ces schémas de fonctionnement, ainsi qu'au moins une unité de calcul desdites consignes, à partir des valeurs fonctions des mesures, en optimisant sur au moins un critère d'optimisation en fonction desdits schémas de fonctionnement.

L'invention a encore pour objet un équipement de bâtiment du type précité, qui possède au moins un fonctionnement propre, ainsi qu'un schéma de fonctionnement représentatif de ce fonctionnement propre, et qui comporte des moyens d'envoi de ce schéma de fonctionnement à destination d'un dispositif calculateur.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, parmi lesquels :
- la figure 1 est un schéma d'ensemble d'un système de gestion et des liens fonctionnels entre tout ou partie d'un bâtiment et ce système de gestion, qui a pour fonction de piloter plusieurs paramètres de confort du bâtiment et qui est conforme à l'invention ;
- chacune des figures 2 à 5 représente un graphique illustrant l'un de plusieurs aspects du fonctionnement d'un équipement du bâtiment de la figure 1, en particulier d'un équipement d'éclairage conforme à l'invention ;
- les figures 6 et 7 illustrent deux étapes successives, qui sont la construction d'un schéma de fonctionnement conforme à un protocole de communication à l'intérieur du système de gestion et son interprétation ultérieure dans une optimisation par un dispositif calculateur du système de gestion de la figure 1.

### Description d'un mode préférentiel de l'invention

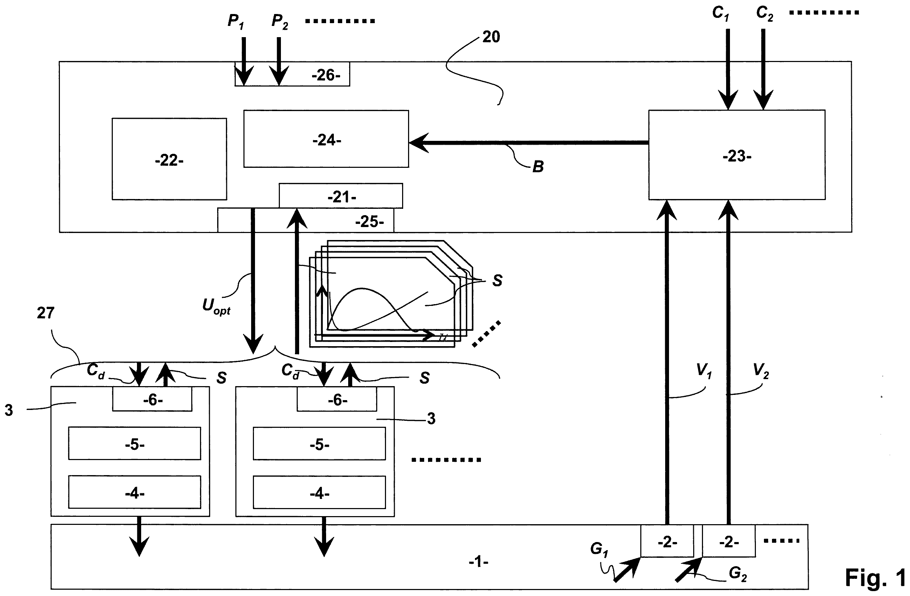

Sur la figure 1, la référence 1 désigne tout ou partie d'un bâtiment, qui peut être de n'importe quel type et, par exemple, qui peut être un immeuble de bureaux ou une maison individuelle. Le confort dans l'espace de bâtiment 1 dépend de plusieurs paramètres, tels que la température ambiante, la qualité de l'air, en particulier son taux de dioxyde de carbone, ou l'éclairement lumineux. On désigne ces paramètres par l'expression « paramètres de confort » dans le présent texte et dans les revendications annexées.

Dans l'espace de bâtiment 1, plusieurs capteurs 2 ont pour fonction de mesurer des grandeurs, qui sont relatives aux paramètres de confort considérés et dont des exemples sont la température G₁ ou l'éclairement lumineux G₂ en un ou plusieurs endroits de l'espace de bâtiment 1.

L'espace de bâtiment 1 est en outre pourvu de plusieurs équipements 3, tels que des radiateurs de chauffage, une ou plusieurs climatisations, une ou plusieurs ventilations mécaniques contrôlées souvent désignée en France par l'acronyme VMC, un ou plusieurs dispositif de réglage du flux lumineux d'origine solaire par occultation totale ou partielle des ouvertures donnant sur l'extérieur. Bien entendu, les équipements 3 peuvent être de bien d'autres types. En particulier, le ou les équipements de chauffage peuvent notamment comprendre au moins une pompe à chaleur, un radiateur électrique, un système de chauffage par air pulsé, une chaudière de combustion, dont certains peuvent en outre être combinés au sein du même espace de bâtiment 1.

Chaque équipement 3 comprend au moins un dispositif ou appareil 4 d'action sur l'un au moins des paramètres de confort, ainsi qu'un contrôleur 5 qui commande cet appareil 4 en fonction d'une consigne de commande C_{d}. Cette dernière est reçue part l'intermédiaire d'un port 6 d'entrée et/ou de sortie d'informations.

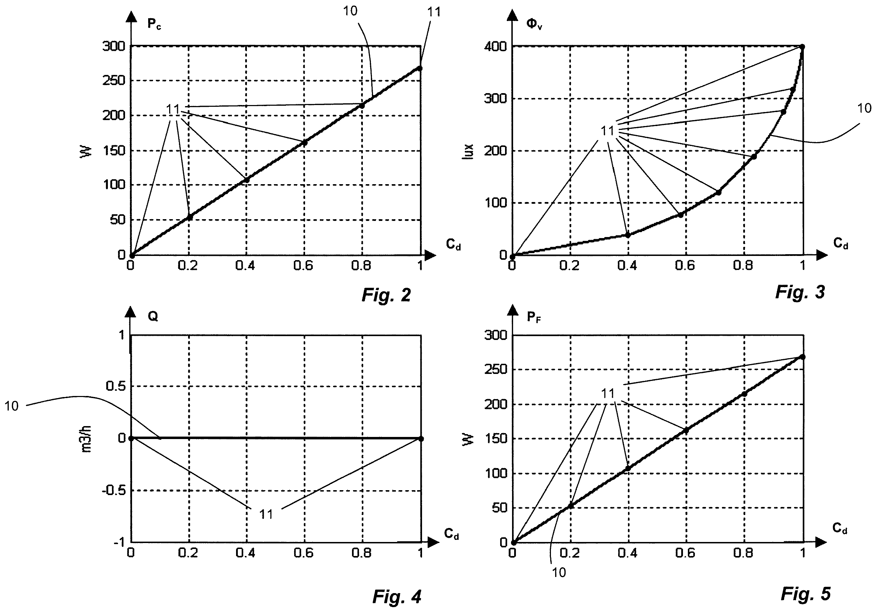

Le fonctionnement propre d'un exemple d'équipement 3, à savoir un équipement d'éclairage, est illustré aux figures 2 à 5, sur chacune desquelles une courbe 10 représente graphiquement la relation entre une consigne de commande reçue C_{d} et une conséquence en résultant, telle qu'une action sur un des paramètres de confort.

Au moins lorsqu'il fonctionne, l'équipement d'éclairage 3 précité consomme une puissance Pc, comme illustré à la figure 2. Il agit sur l'éclairement lumineux, du fait du flux lumineux φᵥ qu'il produit selon la relation représentée graphiquement à la figure 3. Parallèlement, le même équipement d'éclairage 3 agit également sur la température ambiante puisque son rayonnement, y compris le flux lumineux φᵥ, se traduit par un apport de chaleur et donc une puissance de chauffage fournie référencée P_{F} à la figure 5. En revanche, l'équipement d'éclairage 3 n'a aucune action sur le débit d'air de renouvellement Q dans l'espace de bâtiment 1, ainsi qu'on peut le voir à la figure 4.

Les courbes 10 des figures 2 à 5 sont discrétisées en un ensemble de points 11, en vue de la génération d'un schéma de fonctionnement S qui soit représentatif du fonctionnement propre de l'équipement d'éclairage 3 précité. Une forme possible d'un tel schéma de fonctionnement S et une manière possible de le générer sont précisées plus loin.

De retour sur la figure 1, la référence 20 désigne un dispositif calculateur programmable, qui comporte au moins une mémoire 21, une unité de calcul 22 et des programmes, dont un programme 23 de calcul des besoins dans l'espace de bâtiment 1 et un algorithme d'optimisation 24.

Le dispositif calculateur 20 comporte également des ports d'entré/sortie, qui lui permettent de communiquer des informations avec l'extérieur. L'un de ces ports d'entrée/sortie constitue tout ou partie de moyens 25 de réception de schémas de fonctionnement S et de communication de ces derniers à la mémoire 21. Un autre port d'entrée/sortie forme des moyens 26 de réception, depuis l'extérieur, d'un ou plusieurs paramètres variables d'optimisation, tels que ceux référencés P₁ et P₂, destinés à être employés par l'unité de calcul 22 lors de la mise en oeuvre de l'algorithme d'optimisation 24. Le dispositif calculateur 20 est pourvu d'autres ports d'entrée/sortie, qui ne sont pas représentés dans un souci de clarté.

Schématiquement représenté, un bus de communication 27 approprié relie les équipements 3 au dispositif calculateur 20. Il est à même d'acheminer les schémas de fonctionnement S dans un sens, à savoir des équipements 3 jusqu'au dispositif calculateur 20, ainsi qu'un vecteur Uₒₚₜ dans l'autre sens. Ce vecteur Uₒₚₜ contient l'ensemble des consignes de commande C_{d} à destination des équipements 3.

De l'extérieur, le dispositif calculateur 20 reçoit une ou plusieurs commandes, telles que celles référencées C₁ et C₂, dont chacune fixe le niveau souhaité par le ou les utilisateurs pour l'un des paramètres de confort. Ce ou ces utilisateurs communiquent ce ou ces commandes au moyen d'au moins une interface, dont de nombreux exemples bien connus en eux-mêmes sont disponibles sur le marché et qui n'est pas représentée dans un souci de clarté.

A partir des grandeurs mesurées telles que G₁ et G₂, les capteurs 2 envoient des valeurs, telles que celles référencées V₁ et V₂, à destination du dispositif calculateur 20. Ces valeurs sont fonctions des grandeurs mesurées telles que G₁ et G₂.

Le programme 23 calcule les besoins B quant aux paramètres de confort, dans l'espace de bâtiment 1. Pour ce faire, il confronte les valeurs en provenance des capteurs 2, telles que V₁ et V₂, à la ou aux commandes fixées, telles que C₁ et C₂.

Les besoins B sont employés dans une étape ultérieure, dans laquelle l'unité 22 calcule les consignes de commande C_{d} à destination des équipements 3, en effectuant une optimisation. Cette optimisation s'effectue en fonction des schémas de fonctionnement S, sur un ou plusieurs critères d'optimisation qui peuvent être pondérés entre eux et dont un au moins est avantageusement choisi parmi une production minimale de dioxyde de carbone, un coût minimal de fonctionnement et une puissance minimale de fonctionnement, tout en pouvant également l'être parmi d'autres possibilités encore telles que l'énergie terminale, l'énergie primaire, etc.

Dans l'optimisation effectuée par l'unité de calcul 22, il peut être employé un ou plusieurs paramètres variables d'optimisation tels que P₁ et P₂, qui peuvent être fournis en temps réel, par exemple par une connexion à une base de donnée via l'Internet ou être régulièrement saisis manuellement. Ce ou ces paramètres variables d'optimisation sont avantageusement choisis parmi un coût moyen de l'énergie et un coût d'une forme particulière d'énergie telle que l'électricité ou un combustible fossile ou non. Cela a pour avantage de permettre une prise en compte des variations du ou des prix de l'énergie dans l'optimisation.

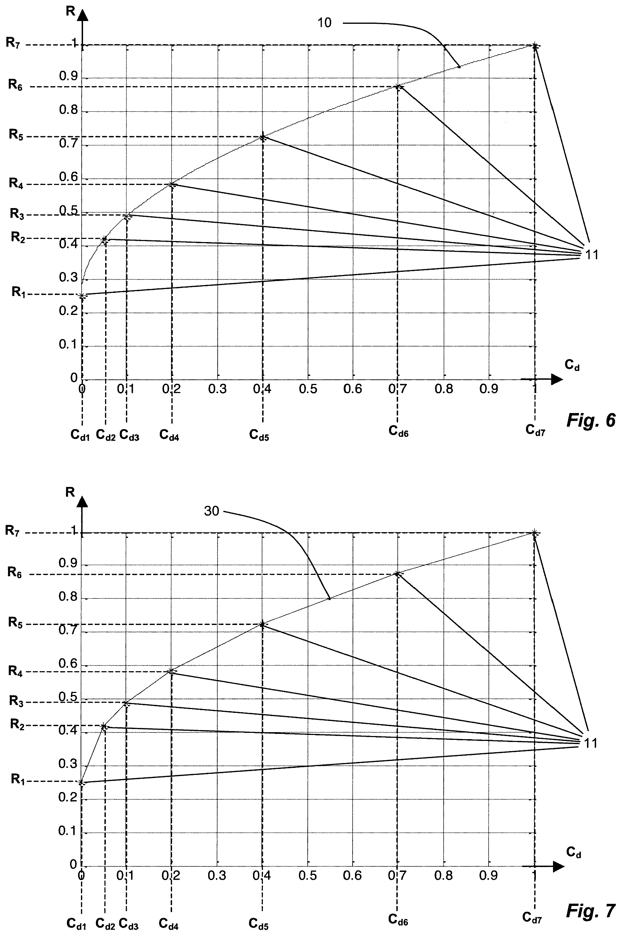

La figure 6 illustre la manière utilisée pour générer une partie d'un schéma S. Elle est analogue à chacune des figures 2 à 5, en ce qu'elle illustre une partie du fonctionnement propre d'un équipement 3 d'un type non précisé. La courbe 10 y représente graphiquement la relation entre une consigne de commande reçue C_{d} et une conséquence R en résultant, telle qu'une action sur un des paramètres de confort. Elle est discrétisée en un ensemble de points 11, dont chacun est repéré par ses cordonnées, c'est-à-dire son abscisse et son ordonnée. Par exemple, le premier et le deuxième point 11 en partant de la gauche sont respectivement repérés par les coordonnées (C_{d1}, R₁) et les coordonnées (C_{d2}, R₂). Le schéma S de l'équipement 3 considéré ici comprend les coordonnées de l'ensemble des points 11 de la figure 6, c'est-à-dire la suite de nombres (C_{d1}, R₁ ; C_{d2}, R₂ ; C_{d3}, R₃ ; C_{d4}, R₄ ; C_{d5}, R₅ ; C_{d6}, R₆ ; C_{d7}, R₇).

Les coordonnées (C_{d1}, R₁ ; C_{d2}, R₂ ; Cd3, R₃ ; C_{d4}, R₄ ; C_{d5}, R₅ ; C_{d6}, R₆ ; C_{d7}, R₇) de l'ensemble des points 11 d'une courbe 10 peuvent ne constituer qu'une partie du schéma S. Tel est le cas dans l'exemple de l'équipement d'éclairage 3, dont le fonctionnement est illustré par les figures 2 à 5. Dans ce cas, le schéma S de cet équipement d'éclairage 3 comprend les coordonnées de tous les points 11 de l'ensemble des figures 2 à 5, ainsi que des informations indiquant de quelle courbe 10 proviennent les coordonnées de chacun de ces points 11.

A partir des schémas S, le dispositif calculateur 20 reconstruit une approximation du fonctionnement des appareils 3. La figure 7 en illustre un exemple. Les points 11 de cette figure 7 sont ceux qui proviennent de la figure 6 et que le dispositif calculateur 20 a reçu dans un schéma S, via le bus 27. A partir de ces points 11, le dispositif calculateur 20 construit une approximation qui est représentée par la courbe 30. Dans le cas de la figure 7, une interpolation linéaire est employée pour générer cette approximation, étant précisé qu'on peut employer d'autres méthodes telles que la méthode du plus proche point, l'interpolation quadratique ou cubique, etc.. Plus la densité des points 11 d'une courbe 10 est importante, plus le résultat final sera précis.

A partir des approximations des fonctionnements des équipements 3, l'algorithme d'optimisation 24 mis en oeuvre par l'unité de calcul 22 effectue l'optimisation mentionnée précédemment. Cet algorithme peut être un algorithme de recherche de minimum de fonction sous contrainte. Celui de la méthode appelée « fmincon » disponible dans le logiciel commercialisé sous le nom ou la marque commerciale « Matlab » par la société Mathworks a donné des résultats satisfaisants dans une application de l'invention.

L'invention ne se limite pas au mode de réalisation décrit précédemment. En particulier, l'exemple d'équipement d'éclairage 3 possède un fonctionnement pouvant être représenté par des courbes 10 à une dimension. Cet exemple a été choisi ainsi dans un souci de clarté. Des équipements 3 ayant un fonctionnement plus complexes peuvent toutefois être employés sans sortir du cadre de l'invention. De tels équipements peuvent avoir un fonctionnement qui répond à plusieurs commandes C_{d}. Dans le cas où ces commandes C_{d} sont au nombre de deux, les courbes 10 sont remplacées par des surfaces, le principe de la discrétisation de ces surfaces en points reposant sur le même principe que celui exposé précédemment. Un occulteur solaire à lamelles peut constituer un exemple d'équipement 3 ayant un fonctionnement qui fait intervenir plusieurs commandes C_{d}. Ces commandes sont la quantité de déploiement de l'occulteur selon une direction perpendiculaire aux lamelles et l'orientation angulaire de ces lamelles.

En outre, les schémas de fonctionnement S peuvent être fournis au dispositif calculateur 20 autrement que depuis les équipements 2. Par exemple, ils peuvent être communiqués depuis un ordinateur connecté au dispositif calculateur 20.

## Revendications

1. Système de gestion d'au moins un paramètre de confort d'un bâtiment, comportant :
- plusieurs capteurs (2) de mesure d'au moins une grandeur (G₁, G₂) relative au paramètre de confort et d'envoi de valeurs (V₁, V₂) fonctions de mesures de cette grandeur,
- au moins un dispositif calculateur (20) de compilation desdites valeurs en provenance des capteurs et d'envoi de consignes (Uₒₚₜ, C_{d}),
- plusieurs équipements de bâtiment (3) dont chacun comprend au moins un appareil (4) d'action au moins sur ledit paramètre de confort et un contrôleur (5) de réception d'au moins une desdites consignes (C_{d}) et de commande de l'appareil d'action en fonction de cette consigne,
**caractérisé en ce qu'**il comporte des schémas (S) de fonctionnement des équipements (3), le dispositif calculateur (20) comportant au moins une mémoire (21) de stockage desdits schémas de fonctionnement (S), des moyens (25) de réception et de communication, à ladite mémoire, de ces schémas de fonctionnement (S), ainsi qu'au moins une unité (22) de calcul desdites consignes (C_{d}), à partir des valeurs (V₁, V₂) fonctions des mesures, en optimisant sur au moins un critère d'optimisation en fonction desdits schémas de fonctionnement (S).

2. Système de gestion selon la revendication 1, **caractérisé en ce qu'**au moins l'un des équipements (3) possède au moins un fonctionnement propre, ainsi qu'un schéma de fonctionnement (S) représentatif de ce fonctionnement propre, et comporte des moyens (6) d'envoi de ce schéma de fonctionnement (S) à destination du dispositif calculateur (20).

3. Système de gestion selon la revendication 2, **caractérisé en ce qu'**il comporte un protocole commun de communication desdits schémas de fonctionnement (S), au moins l'un des équipements (3) et le dispositif calculateur (20) étant pourvus de ce protocole commun de manière à pouvoir communiquer un schéma de fonctionnement (S) de l'un vers l'autre.

4. Système de gestion selon l'une quelconque des revendications précédentes, **caractérisé en ce qu'**il comporte au moins un paramètre variable d'optimisation (P₁, P₂) employé par l'unité de calcul pour optimiser ledit critère d'optimisation, le dispositif calculateur (20) comportant des moyens (26) de réception de ce paramètre variable d'optimisation (P₁, P₂) depuis l'extérieur.

5. Système de gestion selon la revendication 4, **caractérisé en ce que** le paramètre variable d'optimisation (P₁, P₂) est choisi parmi un coût moyen de l'énergie et un coût d'une forme particulière d'énergie.

6. Système de gestion selon l'une quelconque des revendications précédentes, **caractérisé en ce que** ledit critère d'optimisation est choisi parmi une production minimale de dioxyde de carbone, un coût minimal de fonctionnement et une puissance minimale de fonctionnement.

7. Dispositif calculateur de compilation de valeurs en provenance de capteurs (2) de mesure d'une grandeur (G₁, G₂) relative à au moins un paramètre de confort d'un bâtiment et d'envoi de consignes (C_{d}) à destination d'équipements de bâtiment (3), **caractérisé en ce qu'**il comporte au moins une mémoire (21) de stockage de schémas (S) de fonctionnement d'équipements de bâtiment (3), des moyens (25) de réception et de communication, à ladite mémoire, de ces schémas de fonctionnement (S), ainsi qu'au moins une unité (22) de calcul desdites consignes (Uₒₚₜ, C_{d}), à partir des valeurs (V₁, V₂) fonctions des mesures, en optimisant sur au moins un critère d'optimisation en fonction desdits schémas de fonctionnement (S).

8. Equipement de bâtiment, comprenant au moins un appareil (4) d'action au moins sur un paramètre de confort d'un bâtiment et un contrôleur (5) de réception d'au moins une consigne (C_{d}) et de commande de l'appareil d'action (4) en fonction de cette consigne (C_{d}), **caractérisé en ce qu'**il possède au moins un fonctionnement propre, ainsi qu'un schéma de fonctionnement (S) représentatif de ce fonctionnement propre, et comporte des moyens (6) d'envoi de ce schéma de fonctionnement (S) à destination d'un dispositif calculateur (20).

## Patentansprüche

1. System zum Steuern mindestens eines Komfortparameters eines Gebäudes, das umfasst:
- mehrere Sensoren (2) zum Messen mindestens einer Größe (G₁, G₂), die sich auf den Komfortparameter bezieht, und zum Versenden von Werten (V₁, V₂), die abhängig sind von Messungen dieser Größe,
- mindestens eine Berechnungsvorrichtung (20) zum Kompilieren der genannten, von den Sensoren gelieferten Werte und Versenden von Richtwerten (Uₒₚₜ, C_{d}),
- mehrere Gebäude-Ausrüstungen (3), von denen jede mindestens ein Gerät (4) zum Einwirken auf mindestens den Komfortparameter umfasst, sowie eine Steuereinheit (5) zum Empfang mindestens eines der genannten Richtwerte (C_{d}) und zur Steuerung des Geräts zum Einwirken abhängig von diesem Richtwert,
**dadurch gekennzeichnet, dass** es Betriebsschemata (S) der Ausrüstungen (3) umfasst, wobei die Berechnungsvorrichtung (20) mindestens einen Speicher (21) zum Speichern der genannten Betriebsschemata (S) umfasst, Mittel (25) zum Empfang und zur Kommunikation dieser Betriebsschemata (S) mit dem genannten Speicher sowie mindestens eine Einheit (22) zur Berechnung der genannten Richtwerte (C_{d}) auf der Grundlage der aus den Messungen resultierenden Werte (V₁, V₂), indem mindestens ein Optimierungskriterium abhängig von den genannten Betriebsschemata (S) optimiert wird.

2. Steuerungssystem nach Anspruch 1, **dadurch gekennzeichnet, dass** mindestens eine der Ausrüstungen (3) mindestens eine eigene Funktion sowie ein Betriebsschema (S) hat, das repräsentativ für diese eigene Funktion ist und Mittel (6) zum Senden dieses Betriebsschemas (S) an die Berechnungseinheit (20) umfasst.

3. Steuerungssystem nach Anspruch 2, **dadurch gekennzeichnet, dass** es ein gemeinsames Kommunikationsprotokoll der Betriebsschemata (S) umfasst, wobei mindestens eine der Ausrüstungen (3) und die Berechnungsvorrichtung (20) mit diesem gemeinsamen Protokoll versehen sind, um ein Betriebsschema (S) von einem zum anderen kommunizieren zu können.

4. Steuerungssystem nach einem der vorstehenden Ansprüche, **dadurch gekennzeichnet, dass** es mindestens einen variablen Optimierungsparameter (P₁, P₂) umfasst, der von der Berechnungsvorrichtung zur Optimierung des genannten Optimierungskriteriums verwendet wird, wobei die genannte Berechnungsvorrichtung (20) Mittel (26) zum Empfang dieses variablen Optimierungsparameters (P₁, P₂) von außerhalb umfasst.

5. Steuerungssystem nach Anspruch 4, **dadurch gekennzeichnet, dass** der variable Optimierungsparameter (P₁, P₂) aus durchschnittlichen Energiekosten und einem Preis einer besonderen Energieform ausgewählt wird.

6. Steuerungssystem nach einem der vorstehenden Ansprüche, **dadurch gekennzeichnet, dass** das genannte Optimierungskriterium aus einem geringstmöglichen Kohlendioxydausstoß, geringstmöglichen Betriebskosten und einer geringstmöglichen Betriebsleistung ausgewählt wird.

7. Berechnungsvorrichtung zum Kompilieren von Werten, die von Sensoren (2) stammen, die eine Größe (G₁, G₂) messen, die sich auf mindestens einen Komfortparameter eines Gebäudes beziehen, und zum Senden von Richtwerten (C_{d}) an Gebäudeausrüstungen (3), **dadurch gekennzeichnet, dass** sie mindestens einen Speicher (21) zum Speichern von Betriebsschemata (S) von Gebäudeausrüstungen (3), Mittel (25) zum Empfang und zur Kommunikation dieser Betriebsschemata (S) an den genannten Speicher sowie mindestens eine Berechnungseinheit (22) der genannten Richtwerte (Uₒₚₜ, C_{d}) ausgehend von den Werten (V₁, V₂) umfasst, die sich aus den Messungen ergeben, durch Optimierung mindestens eines Optimierungskriteriums abhängig von den genannten Betriebsschemata (S).

8. Gebäudeausrüstung, die mindestens ein Gerät (4) zur Einwirkung auf mindestens einen Komfortparameter eines Gebäudes umfasst, und eine Steuereinheit (5) zum Empfang mindestens eines Richtwerts (C_{d}) und zur Steuerung des Geräts (4) zur Einwirkung abhängig von diesem Richtwert (C_{d}), **dadurch gekennzeichnet, dass** sie mindestens eine eigene Funktion sowie ein Betriebsschema (S) besitzt, das repräsentativ für diese eigene Funktion ist, und Mittel (6) zum Senden dieses Betriebsschemas (S) an die Berechnungseinheit (20) umfasst.

## Claims

1. System for managing at least one comfort parameter of a building, comprising:
- several measurement sensors (2) for measuring at least one quantity (G₁, G₂) relative to the comfort parameter and for sending values (V₁, V₂) according to measurements of this quantity,
- at least one calculator device (20) for compilation of said values originating from the sensors and for sending setpoints (Uₒₚₜ, C_{d}),
- several building system units (3) each of which comprises at least one acting apparatus (4) acting at least on said one comfort parameter and a controller (5) receiving at least one of said setpoints (C_{d}) and commanding the acting apparatus according to this setpoint,
**characterized in that** it comprises operating diagrams (S) of the building system units (3), the calculator device (20) comprising at least one memory (21) for storing said operating diagrams (S), means (25) for performing reception and communication of these operating diagrams (S) to said memory, and at least one calculator unit (22) for calculating said setpoints (C_{d}) from values (V₁, V₂) according to these measurements, optimizing on at least one optimization criterion according to said operating diagrams (S).

2. System for managing according to claim 1, **characterized in that** at least one of the building system units (3) has at least one self operation, and an operating diagram (S) representative of this self operation, and comprises means (6) for sending this operating diagram (S) to the calculator device (20).

3. System for managing according to claim 2, **characterized in that** it comprises a common communication protocol of said operating diagrams (S), at least one of the building system units (3) and the calculator device (20) being provided with this common protocol so as to be able to communicate an operating diagram (S) from one to the other.

4. System for managing according to any one of the foregoing claims, **characterized in that** it comprises at least one variable optimization parameter (P₁, P₂) used by the calculator unit to optimize said optimization criterion, the calculator device (20) comprising means (26) for receiving this variable optimization parameter (P₁, P₂) from the outside.

5. System for managing according to claim 4, **characterized in that** the variable optimization parameter (P₁, P₂) is chosen from a mean energy cost and a cost of a particular form of energy.

6. System for managing according to any one of the foregoing claims, **characterized in that** said optimization criterion is chosen from a minimum carbon dioxide production, a minimum operating cost and a minimum operating power.

7. Calculator device for performing compilation of values originating from measurement sensors (2) for measuring a quantity (G1, G2) relative to at least one comfort parameter of a building and for sending setpoints (Cd) to building system units (3), **characterized in that** it comprises at least one memory (21) for storing operating diagrams (S) of building system units (3), means (25) for performing reception and communication of these operating diagrams (S) to said memory, and at least one calculator unit (22) for calculating said setpoints (Uopt, Cd) from values (V1, V2) according to these measurements, optimizing on at least one optimization criterion according to said operating diagrams (S).

8. Building system comprising at least one acting apparatus (4) acting at least on one comfort parameter of a building and a controller (5) receiving at least one setpoint (C_{d}) and commanding the acting apparatus (4) according to this setpoint (C_{d}), **characterized in that** it has at least one self operation, and an operating diagram (S) representative of this self operation, and comprises means (6) for sending this operating diagram (S) to a calculator device (20).
